# EUROPÄISCHE PATENTSCHRIFT

(11) **EP 2 881 314 B1**
(45) Veröffentlichungstag und Bekanntmachung des Hinweises auf die Patenterteilung: **26.08.2020**
(21) Anmeldenummer: 14194753.1
(22) Anmeldetag: 25.11.2014
(51) Int. Cl.: B62K 21/12, B62K 21/26

(54) **Fahrradgriff**
Bicycle hand grip
Poignée de vélo

(30) Priorität: 03.12.2013 DE 202013009870 U
(43) Veröffentlichungstag der Anmeldung: 10.06.2015
(73) Patentinhaber: Ergon International GmbH, 56070 Koblenz (DE)
(72) Erfinder: Krause, Andreas, 56068 Koblenz (DE)
(74) Vertreter: dompatent von Kreisler Selting Werner - Partnerschaft von Patent- und Rechtsanwälten mbB

(56) Entgegenhaltungen:
- WO-A1-2013/013519
- DE-U1-202009 002 087
- DE-U1-202011 104 975

## Beschreibung

Die Erfindung betrifft einen Fahrradgriff, insbesondere einen Fahrradgriff für Trekkingbikes und Mountainbikes. Besonders geeignet ist der erfindungsgemäße Fahrradgriff zum Befestigen auf Fahrradlenkern aus Carbon oder anderen Faserverbundwerkstoffen.

Fahrradgriffe weisen beispielsweise eine zylindrische, insbesondere geschlitzte Hülse auf, wobei die Hülse auf dem Fahrradlenker mit Hilfe eines Klemmmittels befestigt wird. Durch das Klemmmittel erfolgt ein Zusammenpressen der geschlitzten Hülse und somit ein klemmendes Befestigen des Fahrradgriffs an dem Fahrradlenker.

Aus WO 2005/021366 ist ein Fahrradgriff bekannt, der eine geschlitzte Hülse zum Aufstecken auf einen Fahrradlenker aufweist. Die Hülse ist mit einem Greifelement verbunden. Ferner weist die Hülse einen Klemmbereich auf, der insbesondere an der Außenseite des Griffs vorgesehen ist. Zur Befestigung des Fahrradgriffs an dem Fahrradlenker wird ein als Haltehorn bzw. Barend ausgebildetes Klemmmittel derart angeordnet, dass es den Klemmbereich der Hülse umgibt. Mit Hilfe einer Schraube erfolgt sodann ein klemmendes Befestigen der Hülse auf dem Fahrradlenker.

Aus US 6,263,759 ist ein Fahrradgriff mit einem Haltehorn bekannt. Der Fahrradgriff weist eine auf das Lenkerende aufsteckbare Hülse aus relativ steifem Material auf, die von einem Greifelement aus weichem Material umgeben ist. Zur Lagefixierung der Hülse weist die Hülse an beiden Enden sich in Längsrichtung erstreckende Ansätze auf. Die Ansätze greifen in ebenfalls auf beiden Seiten des Fahrradgriffs angeordnete ringförmig ausgebildete Klemmmittel ein. Die beiden Klemmmittel sind ringförmig ausgebildet und weisen einen radial verlaufenden Schlitz auf. Die Klemmung erfolgt mit Hilfe einer Schraube durch Verringerung der Schlitzbreite. Das Lenkerhorn ist gesondert mit dem Lenker über eine weitere Klemmung verbunden.

Bei relativ langen Haltehörnern können, insbesondere wenn ein Mountainbike im Gelände gefahren wird, im Bereich der Klemmung hohe Kräfte und Momente auftreten. Dies kann dazu führen, dass sich das Haltehorn verdreht. Ein Drehen des Haltehorns stellt ein hohes Sicherheitsrisiko dar.

Des Weiteren besteht insbesondere bei Fahrradlenkern aus Carbon oder anderen Faserverbundwerkstoffen das Risiko, dass durch das Befestigen mittels eines Klemmelements, unabhängig davon, ob dieses Klemmelement in einem Haltehorn bzw. Barend integriert ist oder lediglich ein Klemmelement zum klemmenden Befestigen des Griffelements darstellt, das Risiko, dass durch das Klemmen das Lenkermaterial beschädigt wird. Bei Fahrradlenkern aus Carbon oder dergleichen, können durch die hohen Klemmkräfte Kerbspannungen in das Lenkermaterial eingebracht werden. Diese können zur Beschädigung und ggf. zum Schwächen des Materials führen. Ferner kann bei einem Klemmelement, das einen über die gesamte Breite des Klemmelements radial verlaufenden Klemmschlitz aufweist, beim Klemmen Material des Lenkers in diesen Klemmschlitz gedrückt werden. Eine derartige Materialverformung, die zum Ausbilden einer Art sich in den Klemmschlitz erstreckenden Wulst führt, kann ebenfalls zu Materialschwächungen oder Beschädigungen des Lenkermaterials führen. Selbst wenn hierdurch keine Materialschädigung auftritt, entsteht beim Kunden zumindest der Eindruck, dass hierdurch eine Materialschädigung erfolgte.

Ferner ist aus PCT/EP2006/065827 ein Fahrradgriff mit Haltehorn bzw. Barend bekannt. Der Fahrradgriff weist eine Hülse zum Aufstecken auf einen Fahrradlenker auf. Die Hülse weist an ihrem im montierten Zustand äußeren Ende einen geschlitzten Klemmbereich auf. Das Klemmen des Fahrradgriffs erfolgt über ein Klemmelement, das den Klemmbereich umgibt und in das Haltehorn integriert ist. Der Klemmbereich des Klemmelements ist hierbei breiter als der Klemmbereich der Hülse, so dass es möglich ist, neben der Hülse einen insbesondere aus Aluminium bestehenden Ring als Verdrehsicherung anzuordnen. Dieser Ring bewirkt einerseits, dass das Haltehorn unmittelbar auf dem Lenker klemmend fixiert werden kann und andererseits, dass ein Verdrehen des Haltehorns nicht möglich ist. Eine derartige Verdrehsicherung ist jedoch für Carbonlenker nicht geeignet, da hierbei wiederum Kerbspannungen in den Carbonlenker eingebracht würden.

Aus DE 20 2011 104 975 ist ein Haltehorn bzw. Barend für einen Fahrradgriff bekannt. Zwischen dem Klemmelement des Barends und dem Fahrradlenker ist ein ringförmiges verformbares Klemmelement angeordnet. Die Verformung des Ringelements erfolgt bei der Montage des Barends auf Grund der Durchmesserverringerung.

Aus WO 2013/013519 ist ein Fahrradgriff in Verbindung mit einem Haltehorn bzw. Barend bekannt. Der Fahrradgriff weist ein Klemmelement auf. In dieses wird ein zylindrischer Ansatz des Haltehorns eingesteckt. Der Fahrradgriff wird sodann zusammen mit dem Haltehorn auf das Lenkerende gesteckt und auf diesem fixiert.

Aufgabe der Erfindung ist es, einen Fahrradgriff zu schaffen, der sicher und zuverlässig an einem Fahrradlenker, insbesondere einem Fahrradlenker aus einem Faserverbundstoff wie Carbon, montierbar ist.

Die Lösung der Aufgabe erfolgt erfindungsgemäß durch die Merkmale des Anspruchs 1.

Der Fahrradgriff weist eine üblicherweise aus relativ hartem Kunststoff hergestellte Hülse zum Aufstecken auf den Fahrradlenker auf. Die Hülse ist von einem insbesondere aus weicherem Kunststoffmaterial hergestellten Greifelement umgeben. Hierbei ist vorzugsweise die gesamte Hülle von dem Greifelement in Umfangsrichtung vollständig umgeben. Ggf. können jedoch auch nur Teilbereiche der Hülse von dem Greifelement umgeben sein, so dass die Außenseite des Fahrradgriffs teilweise durch das Greifelement, teilweise durch die Hülse selbst gebildet ist. Ferner weist der Fahrradgriff ein Klemmelement zum klemmenden Befestigen des Fahrradgriffs am Fahrradlenker auf. In montiertem Zustand umgibt das vorzugsweise schellenartig ausgebildete Klemmelement den Fahrradlenker. Bei einem derartigen schellenartig ausgebildeten Klemmelement erfolgt ein klemmendes Befestigen durch Verringern des Innendurchmessers. Hierzu weist das Klemmelement insbesondere einen sich über die ganze Breite in im Wesentlichen radiale Richtung erstreckenden Klemmschlitz auf. In diesem Bereich kann ein Klemmmittel wie eine Schraube vorgesehen sein. Das Klemmen erfolgt durch Verringern der Breite des Klemmschlitzes und somit durch ein Verringern des Innendurchmessers des Klemmelements.

Erfindungsgemäß wirkt das Klemmelement nicht unmittelbar auf den Fahrradlenker ein. Vielmehr ist innerhalb des Klemmelements zwischen der Innenseite des Klemmelements und dem Fahrradlenker ein Sicherungselement angeordnet. Die Klemmkraft des Klemmelements wirkt in montiertem Zustand somit auf das Sicherungselement und von dem Sicherungselement auf den Fahrradlenker. Durch das Sicherungselement, das insbesondere aus Kunststoff hergestellt ist, wird das Einbringen von Kerbspannungen in den Fahrradlenker vermieden oder zumindest verringert. Durch Vorsehen des erfindungsgemäßen Sicherungselements ist es somit möglich, einen Fahrradgriff sicher an einem Carbonlenker zu montieren, ohne dass der Carbonlenker beschädigt wird. Dies ist insbesondere auch möglich, wenn der Fahrradgriff ein Haltehorn bzw. Barend aufweist, das über das Sicherungselement klemmend am Fahrradlenker befestigt ist. Hierbei kann eine ausreichend sichere Befestigung ohne Beschädigung des Fahrradlenkers trotz der hohen bei Haltehörnern auftretenden Kräfte und Momente während des Fahrradfahrens sichergestellt werden. Hierbei ist es unerheblich, ob durch die entsprechende Klemmung nur das Barend auf dem Lenker fixiert wird oder gleichzeitig zusammen mit dem Barend auch ein Fixieren des Fahrradgriffs selbst erfolgt. Gegebenenfalls könnte der Fahrradgriff unabhängig von dem Barend bspw. durch ein weiteres Klemmelement, das sodann auf der Innenseite des Fahrradgriffs angeordnet wäre, fixiert werden.

Das Sicherungselement ist als gesondertes, von der Hülse unabhängiges Bauteil ausgebildet.

Erfindungsgemäß weist das Sicherungselement einen radial nach außen weisenden Ansatz auf, der in eine Ausnehmung im Klemmelement ragt. Hierdurch wird die Lage des Sicherungselements in Längsrichtung des Fahrradgriffs bzw. Lenkers definiert. Es ist hierdurch sichergestellt, dass das Sicherungselement in Längsrichtung relativ zum Klemmelement richtig angeordnet ist. Hierdurch ist eine Fehlmontage vermieden. Bei dem mindestens einen Ansatz kann es sich um einen oder mehrere Pins oder Stifte handeln. Bevorzugt ist es, dass die Ausnehmung in Umfangsrichtung eine größere Erstreckung als ein entsprechender Ansatz aufweist, so dass das Sicherungselement zumindest in einem gewissen Bereich gegenüber dem Klemmelement verdreht werden kann. Hierbei ist es besonders bevorzugt, dass es sich bei dem Ansatz um einen teilweise oder vollständig ringförmig ausgebildeten Ansatz handelt. Dieser ragt sodann in eine teilweise und bevorzugt ringförmig ausgebildete Nut im Klemmelement. Insbesondere bei einer vollständig ringförmig ausgebildeten Nut ist ein freies Drehen des Sicherungselements unabhängig davon, ob der mindestens eine Ansatz als Pin, als teilringförmiger Ansatz oder als vollständig ringförmiger Ansatz ausgebildet ist, möglich. Des Weiteren ist es auch möglich, dass der mindestens eine Ansatz am Klemmelement und die Ausnehmung am Sicherungselement vorgesehen sind.

In einer bevorzugten Weiterbildung der Erfindung ist das Sicherungselement entlang der Innenseite des Klemmelements insbesondere frei verschiebbar. Das Sicherungselement kann sich somit während und vor dem Verklemmen bewegen. Hierdurch ist in gewissen Grenzen ein Gleiten bzw. Rutschen des Sicherungselements auf dem insbesondere aus Carbon hergestellten Fahrradlenker möglich, so dass beim Klemmen das Einbringen von Kerbspannungen in den Fahrradlenker vermieden oder zumindest stark verringert ist. Besonders bevorzugt ist es, dass das Sicherungselement ringförmig ausgebildet ist, so dass insbesondere ein freies Drehen des Sicherungselements im Klemmelement bzw. auf dem Fahrradlenker möglich ist. Hierdurch kann das Einbringen von Kerbspannungen oder anderen den Fahrradlenker ggf. beschädigenden Kräften weiter verringert, insbesondere vollständig vermieden werden. Besonderes bevorzugt ist es, dass das Sicherungselement aus Kunststoff hergestellt ist, wobei es insbesondere bevorzugt ist, dass das Sicherungselement aus Faserverbundwerkstoffen, insbesondere Carbon, hergestellt ist. Hierdurch weist das Sicherungselement einerseits eine ausreichende Festigkeit, andererseits eine ausreichende Flexibilität auf. Bei einem insbesondere ringförmigen Sicherungselement verlaufen die Fasern im Wesentlichen in Umfangsrichtung. Durch das Herstellen des Sicherungselements aus Faserverbundmaterial kann ein Kriechen des Materials vermieden oder zumindest stark verringert werden. Dies hat den Vorteil, dass nach der Montage des Fahrradgriffes kein Nachspannen nach ein bis zwei Tagen erforderlich ist.

Bei einer besonders bevorzugten Weiterbildung der Erfindung ist das Klemmelement mit einem Haltehorn oder einem Barend verbunden. Insbesondere handelt es sich hierbei um eine feste Verbindung. Besonders bevorzugt ist es, dass ein schellenartig ausgebildetes, insbesondere aus Aluminium hergestelltes Klemmelement mit einem aus Kunststoff insbesondere Faserverbundwerkstoff hergestellten Haltehorn umgeben ist. Des Weiteren ist es bevorzugt, dass das insbesondere schellenartig ausgebildete Klemmelement einen Fortsatz aufweist, der in das Haltehorn ragt. Dadurch kann die Stabilität des Haltehorns selbst verbessert werden.

Es ist erfindungsgemäß möglich, dass das Haltehorn unabhängig vom Fahrradgriff auf dem Lenker befestigt wird. Hierzu weist das Haltehorn ein insbesondere integriertes Klemmelement auf, das vorzugsweise schellenförmig ausgebildet ist. Innerhalb des Klemmelements ist sodann das Sicherungselement wie vorstehende beschrieben angeordnet und vorzugsweise weitergebildet. Ein Haltehorn bzw. Barend, das unabhängig vom übrigen Fahrradgriff auf dem Fahrradlenker mit dazwischen angeordnetem Sicherungselement vorgesehen ist, stellt eine selbstständige, unabhängige Erfindung dar.

Besonders bevorzugt ist jedoch das Vorsehen eines Verbindungselements zur Verbindung der Hülse oberhalb des Greifelements des Fahrradgriffs mit dem Klemmelement, das in bevorzugter Ausführungsform wiederum mit einem Haltehorn verbunden ist. Der Fahrradgriff stellt somit eine Einheit dar. Als Verbindungselement können hierbei entsprechende Ansätze, Pins und dergleichen vorgesehen sein.

Besonders bevorzugt ist es jedoch, dass zur Verbindung des Klemmelements mit der Hülse die Hülse einen Klemmbereich aufweist, der in montiertem Zustand vorzugsweise unmittelbar an das Sicherungselement angrenzt, wobei das Sicherungselement bei dieser Ausführungsform vorzugsweise ringförmig ausgebildet ist. Das Klemmelement umschließt in montiertem Zustand somit einerseits den Klemmbereich der Hülse und andererseits das Sicherungselement. Der Klemmbereich der Hülse ist hierbei in Längsrichtung des Fahrradlenkers neben dem Sicherungselement angeordnet. Bei dieser Ausführungsform ist es weiter bevorzugt, dass die Hülse eine sich insbesondere im Wesentlichen in Längsrichtung erstreckenden Hülsenschlitz aufweist, so dass der Innendurchmesser der Hülse auf einfache Weise mit Hilfe des Klemmelements verringert werden kann, um ein klemmendes Befestigen der Hülse auf dem Fahrradlenker zu realisieren. Da die Hülse vorzugsweise aus Kunststoff hergestellt ist, besteht in diesem Bereich keine Gefahr, dass zu große Kerbspannungen in den Fahrradlenker eingebracht werden.

Bei einer besonders bevorzugten Weiterbildung der Erfindung ist in dem Außenbereich des Klemmbereichs der Fahrradhülse mindestens ein sich vorzugsweise in radialer Richtung nach außen erstreckender Ansatz vorgesehen. Der Ansatz ragt in mindestens eine Ausnehmung des Klemmelements, so dass hierdurch die Lage in Längsrichtung zwischen dem Griffelement bzw. der Hülse des Fahrradgriffs und dem Klemmelement definiert ist. Hierdurch ist eine Fehlmontage vermieden. Es ist hierdurch sichergestellt, dass das Klemmelement den Klemmbereich in Längsrichtung ausreichend überdeckt, um eine sichere Klemmung zu gewährleisten. Dies ist insbesondere bei Griffen relevant, deren Greifelemente mit einem in Richtung des Benutzers weisenden Abstützelement zum Abstützen des Handballens verbunden sind, da hierdurch beim Abstützen auch auf die Hülse entsprechende Momente einwirken.

Der mindestens eine Ansatz im Außen- bzw. Randbereich des Klemmbereichs der Hülse sowie mindestens eine Ausnehmung im Klemmelement sind vorzugsweise wie vorstehend anhand des Ansatzes am Sicherungselement und am Klemmelement ausgebildet. Insbesondere ist der Ansatz an der Hülse ebenfalls vollständig ringförmig radial nach außen weisend ausgebildet. Der Ansatz ragt sodann ebenfalls vorzugsweise in eine ringförmig ausgebildete Nut im Klemmelement.

Besonders bevorzugt ist es, dass sowohl der mindestens eine Ansatz am Sicherungselement als auch der mindestens eine Ansatz an der Hülse in dieselbe Ausnehmung gemeinsam eingreifen. Insbesondere greifen die beiden ringförmig ausgebildeten Ansätze in eine gemeinsame ringförmig ausgebildete Nut. Des Weiteren ist es bevorzugt, dass ein entsprechendes Einrasten der Ansätze in die Ausnehmung erfolgt, so dass hierbei ein Klickgeräusch entsteht. Hierdurch ist für den Benutzer sogar hörbar, dass die Lage der Bauteile zueinander korrekt ist.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht des unmontierten Fahrradgriffs ohne Haltehorn,
- Fig. 2: eine schematische Schnittansicht entlang der Linie II - II in Fig. 1,
- Fig. 3: eine schematische perspektivische Ansicht des Sicherungselements,
- Fig. 4: eine schematische Schnittansicht des Sicherungselements,
- Fig. 5: eine schematische Seitenansicht des Klemmelements,
- Fig. 6: eine schematische Schnittansicht entlang der Linie VI - VI in Fig. 5,
- Fig. 7: eine schematische Seitenansicht des Haltehorns und
- Fig. 8: eine schematische Schnittansicht entlang der Linie VIII - VIII in Fig. 7.

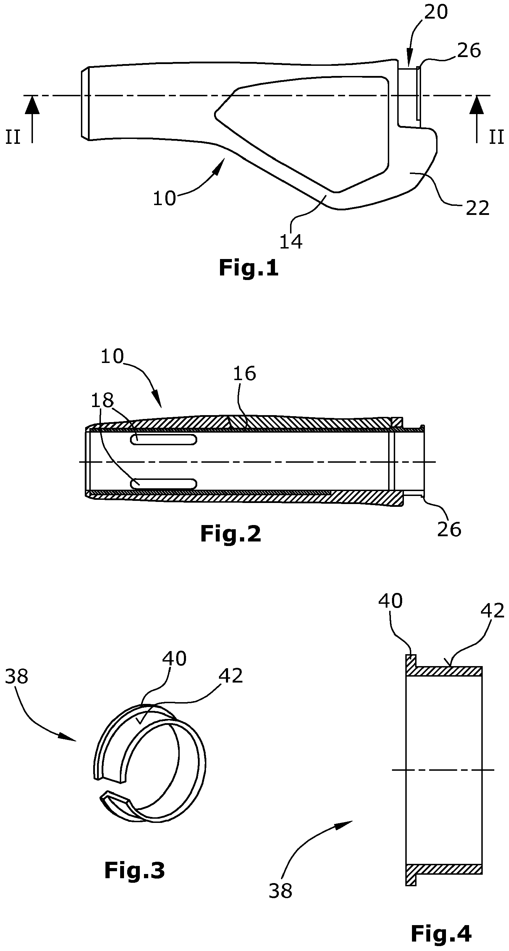

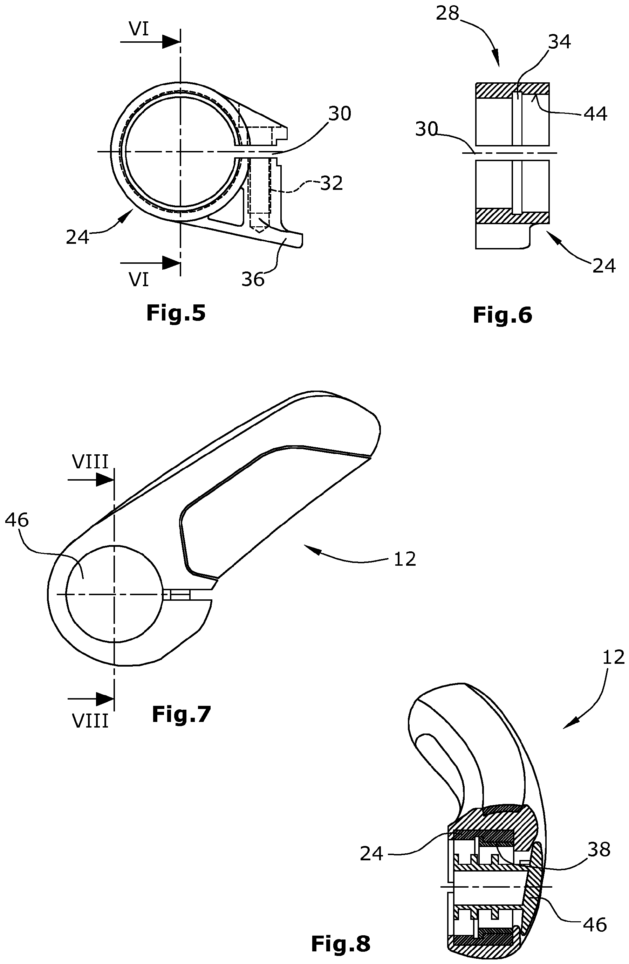

Bei der in Fig. 1 dargestellten Ausführungsform eines erfindungsgemäßen Fahrradgriffs handelt es sich um einen in Fahrtrichtung rechten Fahrradgriff, wobei in Fig. 1 nur ein Greifelement 10 und nicht ein auf in der Fig. 1 rechten Seite angeordnetes Halteelement 12 (Fign. 7, 8) dargestellt ist. Das Greifelement 10 weist im dargestellten Ausführungsbeispiel ein Abstützelement 14 zum Abstützten des Handballens des Fahrradfahrers auf. Des Weiteren ist eine Hülse 16 (Fig. 2) vorgesehen, die zum Aufstecken des Fahrradgriffs auf den Fahrradlenker dient. Das Greifelement 10 umgibt die Hülse vollständig, wobei bspw. schlitzförmige Öffnungen 18 in der Hülse angeordnet sein können, um eine bessere Verbindung zwischen dem insbesondere aus Kunststoff hergestellten Greifelements 10 und der Hülse 16 zu gewährleisten. Das Greifelement 10 weist ggf. Materialien unterschiedlicher Härte auf, die in Fig. 2 durch unterschiedliche Schraffierungen angedeutet sind.

Die Hülse 16 ragt in den Fign. 1 und 2 auf der rechten Seite gegenüber dem Greifelement 10 vor, so dass ein Klemmbereich 20 ausgebildet ist. In den Klemmbereich 20 ragt ein Ansatz bzw. Halteelement 22 des Greifelements 10, das mit dem Abstützelement 14 verbunden ist und für einen gleichmäßigen, insbesondere stufenfreien Übergang zwischen dem Greifelement 10 bzw. dem Abstützelement 14 des Greifelements 10 und dem montierten Haltehorn 12 dient.

Der Klemmbereich 20 der Hülse 16 dient als Verbindungselement zu einem innerhalb des Haltehorns 12 angeordneten Klemmelement 24 (Fign. 5 und 6). Die Hülse 16 weist in einem Außen- bzw. Randbereich, d.h. in einem in den Fign. 1 und 2 nach rechts weisenden Bereich des Klemmbereichs 20 einen in der dargestellten Ausführungsform ringförmig ausgebildeten Ansatz 26 auf.

Das in den Fign. 4 und 5 dargestellte Klemmelement umgibt den Klemmbereich 20 der Hülse 16 teilweise. In montiertem Zustand ist der Klemmbereich 20 in dem in Fig. 6 linken Bereich 28 des Klemmelements 24 angeordnet. Das Klemmelement 24 ist schellenartig ausgebildet und weist einen Klemmschlitz 30 auf. Mit Hilfe einer nicht dargestellten in ein Gewinde 32 einschraubbaren Schraube kann die Breite des Klemmschlitzes 30 und somit der Innendurchmesser des Klemmelements 24 verringert werden. Hierdurch erfolgt ein klemmendes Befestigen.

Zur Montage des Fahrradgriffs wird das Klemmelement 24 auf den Klemmbereich 20 aufgesteckt, so dass in der im dargestellten Ausführungsbeispiel als ringförmige Nut ausgebildeten Ausnehmung 34 (Fig. 6) der ringförmige Ansatz 26 (Fig. 1) einrastet.

Des Weiteren ist mit dem Klemmelement 24 ein Fortsatz 36 verbunden bzw. einstückig ausgebildet. Der Fortsatz 36 ragt in das Haltehorn 12, um den vom Lenker weg weisenden Teil des Haltehorns 12 zu versteifen.

Zur klemmenden Befestigung des Haltehorns 12 auf dem Lenker wird in das in das Haltehorn 12 integrierte Klemmelement 24 ein Sicherungselement 38 (Fig. 3) eingesetzt, wobei es sich bei dem Sicherungselement 38 in der dargestellten Ausführungsform um ein ringförmiges Sicherungselement handelt. Das Sicherungselement wird in das Klemmelement derart eingesetzt, dass ein ringförmiger Ansatz 40 des Sicherungselements 38 ebenfalls in die ringförmige Nut 34 (Fig. 6) des Klemmelements einrastet. Der ringförmige Ansatz 26 der Hülse 16, sowie der ringförmige Ansatz des Sicherungselements 38 sind somit im montierten Zustand in derselben Nut 34 des Klemmelements 24 angeordnet. Eine Außenseite 42 des Sicherungselements 38 liegt somit in montiertem Zustand an einer Innenseite 44 (Fig. 6) des Klemmelements 24 an. Zur einfachen Montage und um Sicherzustellen, dass der Sicherungsring 38 nicht verrutscht ist der Außendurchmesser des Sicherungselements 38 geringfügig größer als der Innendurchmesser des Klemmelements 34 im Bereich der Innenseite 44.

In der teilweise geschnittenen Ansicht der Fig. 8 ist das Sicherungselement 38 in das Klemmelement 24 eingesetzt. Um eine sichere Montage zu gewährleisten, ist das Haltehorn 12 auf der in Fig. 8 rechten Seite offen. Hierdurch ist während der Montage sichtbar, ob das Ende des Lenkers vollständig in das Haltehorn 12 ragt. Die Öffnung wird sodann durch einen Lenkerstopfen 46 verschlossen.

Zur Montage wird somit zuerst das Sicherungselement 38 in das Klemmelement 24 eingesetzt. Anschließend kann das Haltehorn auf den Klemmbereich der Hülse 16 aufgesetzt werden. Im nächsten Schritt kann der Fahrradgriff auf das Lenkerende aufgesetzt werden, wobei, da der Stopfen 46 noch nicht eingesetzt wurde, sichergestellt ist, dass ein vollständiges Aufschieben erfolgt. Dies ist wichtig, um eine sichere Klemmung auf dem Lenker zu gewährleisten. Sodann wird das Klemmelement 24 mittels einer Schraube geklemmt, so dass ein klemmendes Befestigen sowohl der Hülse 16 als auch des Haltehorns 12 auf dem Lenker erfolgt. Hierbei kann im Klemmbereich 20 zusätzlich ein Längsschlitz in der Hülse 16 vorgesehen sein, um die Klemmung zu verbessern.

## Patentansprüche

1. Fahrradgriff, insbesondere zum Befestigen auf Carbonlenkern, mit
einer Hülse (16) zum Aufstecken auf den Fahrradlenker,
einem die Hülse (16) umgebenden Greifelement (10),
einem in montiertem Zustand den Fahrradlenker umgebenden Klemmelement (24) und
einem innerhalb des Klemmelements (24) zwischen einer Innenseite (44) des Klemmelements (24) und dem Fahrradlenker angeordneten Sicherungselement (38),
wobei das Sicherungselement als gesondertes, von der Hülse unabhängiges Bauteil ausgebildet ist,
**dadurch gekennzeichnet, dass**
das Sicherungselement (38) einen radial nach außen weisenden Ansatz (40) aufweist, der in eine Ausnehmung (34) im Klemmelement (24) zur Lagedefinition in Längsrichtung ragt.

2. Fahrradgriff nach Anspruch 1, **dadurch gekennzeichnet, dass** das Sicherungselement (38) entlang der Innenseite (44) des Klemmelements (24) insbesondere frei verschiebbar ist.

3. Fahrradgriff nach Anspruch 1 oder 2, **dadurch gekennzeichnet, dass** das Sicherungselement (38) ringförmig ausgebildet ist und vorzugsweise im Klemmelement (24) frei drehbar ist.

4. Fahrradgriff nach einem der Ansprüche 1 bis 3, **dadurch gekennzeichnet, dass** die Ausnehmung (34) im Klemmelement (24) als insbesondere ringförmige Nut und/oder der Ansatz (40) des Sicherungselements (38) insbesondere ringförmig ausgebildet ist.

5. Fahrradgriff nach einem der Ansprüche 1 bis 4, **dadurch gekennzeichnet, dass** das Klemmelement (24) mit einem Haltehorn (12) verbunden ist.

6. Fahrradgriff nach einem der Ansprüche 1 bis 5, **dadurch gekennzeichnet, dass** das Klemmelement (24) schellenartig ausgebildet ist und vorzugsweise einen in das Haltehorn (12) ragenden Fortsatz (36) aufweist.

7. Fahrradgriff nach einem der Ansprüche 1 bis 6, **dadurch gekennzeichnet, dass** die Hülse (16) ein Verbindungselement (20, 26) zum Verbinden mit dem Klemmelement (24) aufweist.

8. Fahrradgriff nach einem der Ansprüche 1 bis 7, **dadurch gekennzeichnet, dass** zur Verbindung der Hülse (16) mit dem Klemmelement (24) die Hülse (16) einen Klemmbereich (20) aufweist, der in montiertem Zustand vorzugsweise an das insbesondere ringförmig ausgebildete Sicherungselement (38) angrenzt.

9. Fahrradgriff nach Anspruch 8, **dadurch gekennzeichnet, dass** die Hülse (16) im Klemmbereich (20) mindestens einen Hülsenschlitz aufweist.

10. Fahrradgriff nach Anspruch 8 oder 9, **dadurch gekennzeichnet, dass** im Klemmbereich (20) der Hülse (16) ein Ansatz (26) vorgesehen ist, der in eine Ausnehmung (34) im Klemmelement (24) zur Lagedefinition in Längsrichtung ragt.

11. Fahrradgriff nach Anspruch 10, **dadurch gekennzeichnet, dass** im Außenbereich des Klemmbereichs (20) die Hülse (16) vorgesehen ist.

12. Fahrradgriff nach Anspruch 10 oder 11, **dadurch gekennzeichnet, dass** der Ansatz (26) radial nach außen weist.

13. Fahrradgriff nach einem der Ansprüche 10 bis 12, **dadurch gekennzeichnet, dass** die Ausnehmung (34) als ringförmige Nut und/oder der Ansatz (26) ringförmig ausgebildet ist.

14. Fahrradgriff nach Anspruch 10, **dadurch gekennzeichnet, dass** der mindestens eine Ansatz (40) des Sicherungselements (38) und der mindestens eine Ansatz (26) der Hülse (16) in dieselbe im Klemmelement (24) vorgesehene Ausnehmung (34) ragen.

## Claims

1. A bicycle handle grip, in particular for mounting on a carbon handlebar, comprising
a sleeve (16) for attachment onto the bicycle handle grip,
a grip element (10) surrounding the sleeve (16),
a clamping element (24) surrounding the bicycle handlebar in a mounted state, and
a securing element (38) arranged within the clamping element (24) between an inner side (44) of the clamping element (24) and the bicycle handlebar, wherein the securing element is formed as a separate component being independent of the sleeve,
**characterized in that**
the securing element (38) comprises a lug (40) facing radially outward, which protrudes into a recess (34) in the clamping element (24) for position definition in longitudinal direction.

2. The bicycle handle grip according to claim 1, **characterized in that** the securing element (38) is in particular freely displaceable along the inner side (44) of the clamping element (24).

3. The bicycle handle grip according to claim 1 or 2, **characterized in that** the securing element (38) is formed to be ring-shaped and preferably freely rotatable in the clamping element (24).

4. The bicycle handle grip according to claim 1 to 3, **characterized in that** the recess (34) in the clamping element (24) is particularly formed as a ring-shaped groove and/or that the lug (40) of the securing element (38) is particularly formed to be ring-shaped.

5. The bicycle handle grip according to one of claim 1 to 4, **characterized in that** the clamping element (24) is connected to a holding horn (12).

6. The bicycle handle grip according to one of claim 1 to 5, **characterized in that** the clamping element (24) is formed to be bracket-like and preferably comprises an extension (36) protruding into the holding horn (12).

7. The bicycle handle grip according to one of claim 1 to 6, **characterized in that** the sleeve (16) comprises a connection element (20, 26) for connecting to the clamping element (24).

8. The bicycle handle grip according to one of claim 1 to 7, **characterized in that** for connecting the sleeve (16) to the clamping element (24), the sleeve (16) comprises a clamping area (20) which, in a mounted state, is preferably adjacent to the particularly ring-shaped securing element (38).

9. The bicycle handle grip according to claim 8, **characterized in that** the sleeve (16) comprises at least one sleeve slit in the clamping area (20).

10. The bicycle handle grip according to claim 8 or 9, **characterized in that** a lug (26) is provided in the clamping area (20) of the sleeve (16), wherein said lug (26) protrudes into a recess (34) in the clamping element (24) for position definition in longitudinal direction.

11. The bicycle handle grip according to claim 10, **characterized in that** the sleeve (16) is provided at the outside area of the clamping area (20).

12. The bicycle handle grip according to claim 10 or 11, **characterized in that** the lug (26) faces radially outward.

13. The bicycle handle grip according to one of claim 10 to 12, **characterized in that** the recess (34) is formed as a ring-shaped groove and/or that the lug (26) is formed to be ring-shaped.

14. The bicycle handle grip according to claim 10, **characterized in that** the at least one lug (40) of the securing element (38) and the at least one lug (26) of the sleeve (16) protrude into the same recess (34) which is provided in the clamping element (24).

## Revendications

1. Poignée de vélo, en particulier à fixer sur des guidons en carbone, comportant
un manchon (16) à enficher sur le guidon de vélo,
un élément de préhension (10) entourant le manchon (16),
un élément de serrage (24) entourant le guidon de vélo à l'état assemblé et un élément de sécurité (38) agencé à l'intérieur de l'élément de serrage (24) entre un côté intérieur (44) de l'élément de serrage (24) et le guidon de vélo, dans laquelle l'élément de sécurité est réalisé sous forme de composant séparé indépendant du manchon,
**caractérisée en ce que**
l'élément de sécurité (38) présente un épaulement (40) tourné radialement vers l'extérieur et faisant saillie dans un évidement (34) de l'élément de serrage (24) en vue d'une définition de position dans le sens longitudinal.

2. Poignée de vélo selon la revendication 1, **caractérisée en ce que** l'élément de sécurité (38) peut coulisser, en particulier de manière libre, le long du côté intérieur (44) de l'élément de serrage (24).

3. Poignée de vélo selon la revendication 1 ou 2, **caractérisée en ce que** l'élément de sécurité (38) est réalisé sous une forme annulaire et de manière préférée peut tourner, en particulier de manière libre, dans l'élément de serrage (24).

4. Poignée de vélo selon l'une des revendications 1 à 3, **caractérisée en ce que** l'évidement (34) de l'élément de serrage (24) est réalisé sous forme de rainure, en particulier annulaire, et/ou l'épaulement (40) de l'élément de sécurité (38) est réalisé sous une forme en particulier annulaire.

5. Poignée de vélo selon l'une des revendications 1 à 4, **caractérisée en ce que** l'élément de serrage (24) est relié à une corne de maintien (12).

6. Poignée de vélo selon l'une des revendications 1 à 5, **caractérisée en ce que** l'élément de serrage (24) est réalisé à la manière d'un collier et présente de manière préférée un appendice (36) faisant saillie dans la corne de maintien (12).

7. Poignée de vélo selon l'une des revendications 1 à 6, **caractérisée en ce que** le manchon (16) présente un élément de liaison (20, 26) pour une liaison à l'élément de serrage (24).

8. Poignée de vélo selon l'une des revendications 1 à 7, **caractérisée en ce que**, pour relier le manchon (16) à l'élément de serrage (24), le manchon (16) présente une région de serrage (20) qui, à l'état assemblé, est de manière préférée adjacente à l'élément de sécurité (38) réalisé sous une forme en particulier annulaire.

9. Poignée de vélo selon la revendication 8, **caractérisée en ce que** le manchon (16) présente au moins une fente de manchon dans la région de serrage (20).

10. Poignée de vélo selon la revendication 8 ou 9, **caractérisée en ce qu'**est prévu dans la région de serrage (20) du manchon (16) un épaulement (26) faisant saillie dans un évidement (34) de l'élément de serrage (24) en vue d'une définition de position dans le sens longitudinal.

11. Poignée de vélo selon la revendication 10, **caractérisée en ce que** le manchon (16) est prévu dans la région extérieure de la région de serrage (20).

12. Poignée de vélo selon la revendication 10 ou 11, **caractérisée en ce que** l'épaulement (26) est orienté radialement vers l'extérieur.

13. Poignée de vélo selon l'une des revendications 10 à 12, **caractérisée en ce que** l'évidement (34) est réalisé sous forme de rainure annulaire et/ou l'épaulement (26) est réalisé sous une forme annulaire.

14. Poignée de vélo selon la revendication 10, **caractérisée en ce que** l'épaulement (40) de l'élément de sécurité (38), au moins au nombre de un, et l'épaulement (26) du manchon (16), au moins au nombre de un, font saillie dans le même évidement (34) prévu dans l'élément de serrage (24).
